# EUROPEAN PATENT APPLICATION

(11) **EP 1 598 890 A2**
(43) Date of publication of application: **23.11.2005**
(21) Application number: 05009795.5
(22) Date of filing: 04.05.2005
(51) Int. Cl.: H01M 8/10, H01M 8/02

(54) **Membrane electrode assembly**

(30) Priority: 19.05.2004 JP 2004149450
(71) Applicant: AISIN SEIKI KABUSHIKI KAISHA, Kariya-shi, Aichi-ken 448-8650 (JP)
(72) Inventor: Xie, Gang, Kariya-shi Aichi-ken 448-8650 (JP)
(74) Representative: TBK-Patent

(57) **Abstract**

A membrane electrode assembly (9) is formed by arranging a gas diffusion layer (3) for fuel made on the basis of electrically conductive fibers, a catalyst layer (5) for fuel, an electrolyte membrane (2), a catalyst layer (6) for oxidizing agent, and a gas diffusion layer (4) for oxidizing agent made on the basis of electrically conductive fibers in an order described above. The membrane electrode assembly is characterized in that a reinforcement layer (11) for restraining the electrically conductive fibers from sticking into the electrolyte membrane is provided between at least either one of the gas diffusion layer for fuel and the gas diffusion layer for oxidizing agent and the electrolyte membrane, or is provided inside the electrolyte membrane.

## Description

### FIELD OF THE INVENTION

This invention generally relates to a membrane electrode assembly. More particularly, this invention pertains to a membrane electrode assembly for a polymer electrolyte fuel cell, the membrane electrolyte assembly having an electrolyte membrane made of polymer material.

### BACKGROUND

A membrane electrode assembly (hereinafter referred to as a MEA) for a polymer electrolyte fuel cell generally includes a gas diffusion layer for fuel made on the basis of electrically conductive fibers, a catalyst layer for fuel, an electrolyte membrane, a catalyst layer for oxidizing agent, and a gas diffusion layer for oxidizing agent made on the basis of electrically conductive fibers, arranged in an order described above. For improving efficiency in generating electricity of such polymer electrolyte fuel cell, it is required that internal electrical resistance of the membrane electrode assembly become lower. Conventionally, in order to reduce internal electrical resistance of a MEA, the membrane electrode assembly (MEA) is formed by means of a bonding method such as a hot press in which grass transition (softening) phenomena of the electrolyte membrane is utilized. Specifically, for forming the MEA, the electrolyte membrane is sandwiched by electrodes from both sides of the electrolyte membrane. In this condition, the electrolyte membrane and the electrodes are heated up to approximately a glass transition temperature. Then, a pressure (for example, a certain MPa of pressure) is applied to the electrolyte membrane and the electrodes.

However, according to the MEA described above, in a process of the hot press described above, in some cases, electrically conductive fibers contained in the electrodes tend to stick into the electrolyte membrane. A level of gas barrier property of the electrolyte membrane tends to decrease at the parts into which the electrically conductive fibers have stuck.

JP2003-142122A describes a polymer electrolyte fuel cell including a stretched porous polytetrafluoro-ethylene provided inside the electrolyte membrane in order to reinforce the electrolyte membrane. However, the electrolyte membrane of the polymer electrolyte fuel cell has not been sufficiently reinforced, and not been satisfactory in terms of gas barrier property.

A need thus exists for a polymer electrolyte fuel cell having advantages in terms of further restraining reactive gas from permeating. The present invention has been made in view of the above circumstances and provides such a membrane electrode assembly.

### SUMMARY OF THE INVENTION

According to an aspect of the present invention, a membrane electrode assembly (9) is formed by arranging a gas diffusion layer (3) for fuel made on the basis of electrically conductive fibers, a catalyst layer (5) for fuel, an electrolyte membrane (2), a catalyst layer (6) for oxidizing agent, and a gas diffusion layer (4) for oxidizing agent made on the basis of electrically conductive fibers in an order described above. The membrane electrode assembly is characterized in that a reinforcement layer (11) for restraining the electrically conductive fibers from sticking into the electrolyte membrane is provided between at least either one of the gas diffusion layer for fuel and the gas diffusion layer for oxidizing agent and the electrolyte membrane, or is provided inside the electrolyte membrane.

According to a further aspect of the present invention, a membrane electrode assembly (9) formed by arranging an electrode (8) for fuel, an electrolyte membrane (2), and an electrode (7) for oxidizing agent in an order described above. The membrane electrode assembly is characterized in that a reinforcement layer (11) containing a plurality of microbodies having resistance to gas permeability and an electrolyte component having ionic conductivity is provided between at least either one of the electrode for fuel and the electrode for oxidizing agent and the electrolyte membrane, or is provided inside the electrolyte membrane.

According to a further aspect of the present invention, a polymer electrolyte fuel cell includes a membrane electrode assembly (9) formed by arranging a gas diffusion layer (3) for fuel made on the basis of electrically conductive fibers, a catalyst layer (5) for fuel, an electrolyte membrane (2), a catalyst layer (6) for oxidizing agent, and a gas diffusion layer (4) for oxidizing agent made on the basis of electrically conductive fibers in an order described above. The membrane electrode assembly is characterized in that a reinforcement layer (11) for restraining the electrically conductive fibers from sticking into the electrolyte membrane is provided between at least either one of the gas diffusion layer for fuel and the gas diffusion layer for oxidizing agent and the electrolyte membrane, or is provided inside the electrolyte membrane.

According to a further aspect of the present invention, a polymer electrolyte fuel cell includes a membrane electrode assembly (9) formed by arranging an electrode (8) for fuel, an electrolyte membrane (2), and an electrode (7) for oxidizing agent in an order described above. The membrane electrode assembly is characterized in that a reinforcement layer (11) containing a plurality of microbodies having resistance to gas permeability and an electrolyte component having ionic conductivity is provided between at least either one of the electrode for fuel and the electrode for oxidizing agent and the electrolyte membrane, or is provided inside the electrolyte membrane.

According to a further aspect of the present invention, because sticking into the electrolyte membrane can be restrained, further improvement in durability of the electrolyte membrane can be expected. Furthermore, because sticking into the electrolyte membrane can be restrained, permeation of reactive gases through the electrolyte membrane can be restrained, which is thus advantageous for further improvement of utilization of reactive gases.

### BRIEF DESCRIPTION OF THE DRAWINGS

The foregoing and additional features and characteristics of the present invention will become more apparent from the following detailed description considered with reference to the accompanying drawings, wherein:
Fig. 1A represents a cross-sectional view illustrating a silica sheet according to a first example of the present invention;
Fig. 1B represents a cross-sectional view illustrating an electrolyte membrane and the silica sheet, the silica sheet having been arranged onto the electrolyte membrane according to the first example of the present invention;
Fig. 1C represents a cross-sectional view illustrating the electrolyte membrane and a reinforcement layer, the reinforcement layer having been arranged onto the electrolyte membrane according to the first example of the present invention;
Fig. 2A represents a cross-sectional view illustrating the electrolyte membrane and an gas diffusion electrode for fuel and a gas diffusion electrode for oxidizing agent, in a condition before the electrolyte membrane, the gas diffusion electrode for fuel, and the gas diffusion electrode for oxidizing agent are arranged according to the first example of the present invention;
Fig. 2B represents a cross-sectional view illustrating a MEA according to the first example of the present invention;
Fig. 2C represents a cross-sectional view illustrating an electric cell, in which the MEA has been assembled with a distribution plate for fuel and a distribution plate for oxidizing agent according to the first example of the present invention;
Fig. 3A represents a cross-sectional view illustrating an electrolyte membrane and a reinforcement layer having been arranged onto the electrolyte membrane according to a second example;
Fig. 3B represents a cross-sectional view illustrating a MEA according to a second example;
Fig. 4A represents a cross-sectional view illustrating an electrolyte membrane and silica sheets having been arranged onto both surfaces of the electrolyte membrane according to a third example of the present invention;
Fig. 4B represents a cross-sectional view illustrating the electrolyte membrane and reinforcement layers having been arranged onto the both surfaces of the electrolyte membrane according to the third example of the present invention;
Fig. 4C represents a cross-sectional view illustrating a MEA according to the third example of the present invention;
Fig. 5A represents a cross-sectional view illustrating two electrolyte membranes, before one electrolyte membranes, of which a reinforcement layer has been arranged onto one surface, is arranged onto the other electrolyte membrane according to a fourth example of the present invention;
Fig. 5B represents a cross-sectional view illustrating the reinforcement layer sandwiched by the two electrolyte membranes according to the fourth example of the present invention;
Fig. 5C represents a cross-sectional view illustrating a MEA according to the fourth example of the present invention; and
Fig. 6 represents a graph illustrating results of a cell voltage measurement investigation with varied ratio of an electrolyte component relative to the reinforcement layer in terms of % by volume.

### DETAILED DESCRIPTION

An embodiment of the present invention will be explained. A membrane electrode assembly is formed by arranging a gas diffusion layer for fuel made on the basis of electrically conductive fibers, a catalyst layer for fuel, an electrolyte membrane, a catalyst layer for oxidizing agent, and a gas diffusion layer for oxidizing agent made on the basis of electrically conductive fibers, in an order described above. It is preferable that the gas diffusion layer for fuel, the catalyst layer for fuel, the electrolyte membrane, the catalyst layer for oxidizing agent, and the gas diffusion layer for oxidizing agent be made into a single member by means of, but not limited to, a hot-press in which heat and pressure are utilized, and also be made into a single member in a condition of normal temperature. As the electrically conductive fibers serving as electrically conductive material for forming an electrically conductive path, carbon fibers having preferable electrical conductivity and corrosion resistance are generally utilized, but not limited. Electrically conductive fibers such as carbon fibers are so stiff that tend to stick into an object. The catalyst layer for fuel and the catalyst layer for oxidizing agent, which increase a level of reactivity of reaction gases for electric generation, generally include a catalyst and electrically conductive substance and an electrolyte component. A reinforcement layer can restrain the electrically conductive fibers of the gas diffusion layer for fuel and/or the gas diffusion layer for oxidizing agent from sticking into the electrolyte membrane. As a result, the reinforcement layer can restrain reactive gases from permeating through locations where the electrically conductive fibers had been sticking. It is preferable that the reinforcement layer has a plurality of microbodies having resistance to sticking, and resistance to gas permeability, and have an electrolyte component having ionic conductivity.

The reinforcement layer includes a plurality of microbodies having resistance to gas permeability and an electrolyte component having ionic conductivity. It is preferable that the reinforcement layer has resistance to sticking aside from resistance to gas permeability.

It is preferable that the reinforcement layer is provided at a surface of the electrolyte membrane or inside the electrolyte membrane. In this case, the reinforcement layer can be provided at least one of following locations: first, between the catalyst layer for fuel and the electrolyte membrane; second, between the catalyst layer for oxidizing agent and the electrolyte membrane; and third, inside the electrolyte membrane.

In the reinforcement layer, if a ratio of the microbodies mixed is too large, a ratio of the electrolyte component tends to be lower, which tends to reduce a level of ionic conductivity (proton conductivity). In addition, in the reinforcement layer, if the ratio of the microbodies mixed is too small, the ratio of the electrolyte component tends to be higher, which can ensure a sufficient level of ionic conductivity (proton conductivity), but at the same time, which tends to reduce a level of resistance to sticking and resistance to gas permeability. According to investigations, which will be referred to later, while the ratio of the electrolyte component is from 15 % to 100 % by volume relative to the reinforcement layer of 100 % by volume, an average cell voltage was kept to be high. However, when the ratio of the electrolyte component becomes less than 15 % by volume, as the ratio of the electrolyte component decreases, the average cell voltage tends to drastically decrease. As considering above, for ensuring sufficient levels of resistance to sticking and/or resistance to gas permeability, it is preferable that the ratio of the electrolyte component be from 15 % to 85 % by volume, in particular, be from 20 % to 80 % by volume relative to the reinforcement layer of 100 % by volume. It is preferable that the ratio of the microbodies be from 85 % to15 % by volume, in particular, be from 80 % to 20 % by volume relative to the reinforcement layer of 100 % by volume. In addition, the ratio of the microbodies can be from 20 % to 70 % by volume, from 30 % to 60 % by volume relative to the reinforcement layer of 100 % by volume.

As a material of the microbodies, it is preferable that inorganic material having corrosion resistance and higher level of hardness than the electrolyte membrane be utilized. In particular, a material of the microbodies can be at least one of ceramics, carbon, and metal (including intermetallic compound). As ceramics, oxides, nitrides, carbides, borides, or the like, can be utilized. Accordingly, as ceramics, silica, alumina, silicon nitride, silicon carbide, zirconia, titanium carbide, titanium nitride, or the like, can be exampled. Silica is preferable as oxides. Because silica has hydrophilicity, water-holding property of the microbodies can be expected. As carbon, carbon microparticles such as carbon black (including Acetylene Black, Ketjenblack) can be utilized.

A surface of the microbodies can be smooth, or can have fine protruding portions and recessed portions. The fine protruding and recessed portions can contribute to ensure water-holding property of the microbodies. It is because that the amount of the surface area increases, and as a result, possibility of the microbodies to make contact with water can be raised, and capacity of the microbodies to hold water can therefore be enhanced. A particle size of the microbodies varies according to a thickness of the electrolyte membrane, requirement of resistance to sticking, requirement of resistance to gas permeability, pressing force during pressing, or the like. Generally, the particle size of the microbodies can be from 0.05 µm to 20 µm on average. The particle size of the microbodies can be from 0.1 µm to 10 µm, from 0.1 µm to 5 µm on average, furthermore, can be from 0.1 µm to 1 µm, from 0.2 µm to 0.8 µm.

A shape of the microbodies can be particle-like shape, or a particulate fiber-like shape. A ratio of a major axis to a minor axis of the microbodies (a length of a major axis, considering a length of a minor axis as 1.0) can be from 1.0 to 1.5 as an example. In addition, considering one diameter of the microbodies along predetermined direction as 1.0, a length of a diameter orthogonal to the predetermined direction can be from 0.5 to 1.5 as an example. Accordingly, the microbodies can have a spherical shape. It is advantageous that the shape of the microbodies (not flocculated primary particles or secondary particles flocculated in some extent) be spherical in terms of increasing level of packing of the microbodies in the reinforcement layer, furthermore, for making gaps between the adjacent microbodies even in the case of high packing density. The gaps are advantageous to ensure ionic conductivity because of the electrolyte component existing between the gaps. The term "spherical shape" includes a spherical shape and a pseudo spherical shape. The term "pseudo spherical shape" includes a shape having a ratio between a major axis and a minor axis of from 1.0 to 1.2, or a shape, considering a length of predetermined direction as 1.0, having a length of a diameter orthogonal to the predetermined direction of from 0.8 to 1.2.

An average thickness of the reinforcement layer varies according to a particle size of the microbodies, required resistance to sticking, required resistance to gas permeability, a thickness of the electrolyte membrane, a thickness of a gas diffusion layer, or the like. Generally, the average thickness of the reinforcement layer can be, but not limited to, from 0.1 µm to 100 µm, in particular, from 1 µm to 20 µm. The reinforcement layer can be provided over the surface, onto which the gas diffusion layer is projected, of the electrolyte membrane. On occasion, the reinforcement layer can be provided locally at the surface, onto which the gas diffusion layer is projected, of the electrolyte membrane.

### (Examples)

Examples according to the embodiment of the present invention will be explained in comparison to a comparative example. For explanatory purposes, a comparative example will be explained first.

### (Comparative example)

A comparative example will be specifically explained. A mixture containing water, 1000 g by weight, and a carbon black (manufactured by Cabot, VULCAN XC72R), 300 g by weight, was homogenized by means of a homogenizer for 10 minutes. Next, a dispersion (manufactured by Daikin Industries, POLYFLON, Grade D1), containing 60 wt % of tetrafluoroethylene (lately referred to as PTFE), 250 g, was added to the mixture described above. The mixture was further homogenized for 10 minutes. Thus, a carbon ink was made. A carbon paper (manufactured by Toray, TORAYCA TGP-060, thickness: 180 µm) was thrown into the carbon ink for letting the carbon black and the PTFE, in other words, fluorocarbon polymers, contained in the carbon ink, infiltrate into the carbon paper.

Next, the carbon paper was put into a drying furnace maintained in a temperature condition of 80 °C for letting excess moisture contained in the carbon paper evaporate. After that, the carbon paper was maintained in a condition of sintering temperature of 390 °C for 60 minutes for sintering the PTFE. Thus, a water-repellent carbon paper was made. Carbon papers made as described above were utilized for the gas diffusion layer for fuel and the gas diffusion layer for oxidizing agent. As described above, because the gas diffusion layer for fuel and the gas diffusion layer for oxidizing agent are formed on the basis of carbon papers, there exists a danger that the carbon fibers (electrically conductive fibers) forming the carbon paper sticks into the electrolyte membrane during a process of manufacturing the membrane electrode assembly.

Next, a carbon-supported platinum catalyst (manufactured by Tanaka Kikinzoku Kogyo KK, TEC10E60E), containing 55 wt % of platinum, 12 g, a solution of 5 wt % of ion-exchange resin (manufactured by Asahi Kasei Corporation, SS-1080), 106 g, water, 23 g, and as a forming helper agent, isopropyl alcohol, 23 g, were sufficiently mixed for making a catalyst paste. This catalyst paste was, for forming the catalyst layer for oxidizing agent, applied onto the surface of the gas diffusion layer for oxidizing agent by use of a doctor blade method. The catalyst paste was thus made and applied onto the surface of the gas diffusion layer for oxidizing agent so as to make the amount of platinum supported in the catalyst layer for oxidizing agent 0.8 mg/cm². After that, the catalyst paste was dried. Thus, a gas diffusion electrode for oxidizing agent was formed.

Similarly, the catalyst paste described above was, for forming the catalyst layer for fuel, applied onto the surface of the gas diffusion layer for fuel by use of a doctor blade method. In this case, the catalyst paste was thus made and applied so as to making the amount of platinum supported in the catalyst layer for fuel 0.2 mg/cm². After that, the catalyst paste was dried. Thus, a gas diffusion electrode for fuel was formed.

An ion-exchange membrane (manufactured by DuPont Corporation, Nafion I12) having a thickness of 50 µm was utilized as the electrolyte membrane. Then, the gas diffusion electrode for oxidizing agent was arranged onto one surface of the electrolyte membrane. The gas diffusion electrode for fuel was arranged onto the other surface of the electrolyte membrane. After that, the arranged electrolyte membrane and the gas diffusion electrodes were hot-pressed in a condition of 140 °C in a temperature, 8 MPa in a pressure, for 3 minutes. Thus, a membrane electrode assembly (MEA) according to the comparative example was made.

An electric cell was made by a process of assembling a gas distribution plate for fuel and a gas distribution plate for oxidizing agent with the MEA. Next, electric generating operation was intermittently performed in a temperature condition of the cell of 75 °C. First, electricity was generated in a condition of 0.2 ampere/cm² for 3 minutes. After that, electric circuit was opened for 1 minute. These two operations were repeated for 200 hours. In both operations, an air (utilization 40 %) was supplied to the gas diffusion electrode for oxidizing gas, and hydrogen gas (utilization 90 %) was supplied to the gas diffusion electrode for fuel. To both gas diffusion electrodes, gas was supplied in a condition of atmospheric pressure.

In addition, for measuring the amount of cross leak of the MEA, nitrogen gas of 20 KPa is sealed in one side of the MEA. The other side of the MEA was opened to atmosphere. The MEA was kept in this condition for 5 minutes. After that, the amount of pressure reduction of the side, in which the nitrogen gas was sealed, was measured, and the measured amount of pressure reduction was considered to be the amount of cross leak of the cell.

Table 1 represents an initial cell voltage, a cell voltage after 200 hours-intermittent operation test, an initial amount of cross leak of the cell, and the amount of cross leak of the cell after the 200 hours-intermittent operation test.

### (First example)

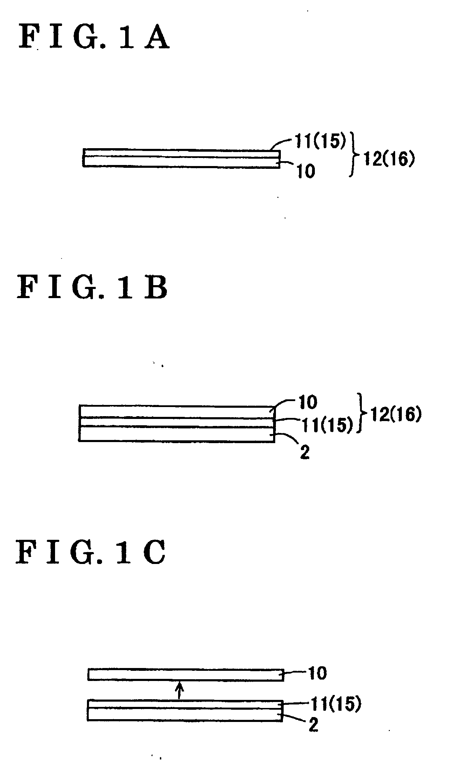

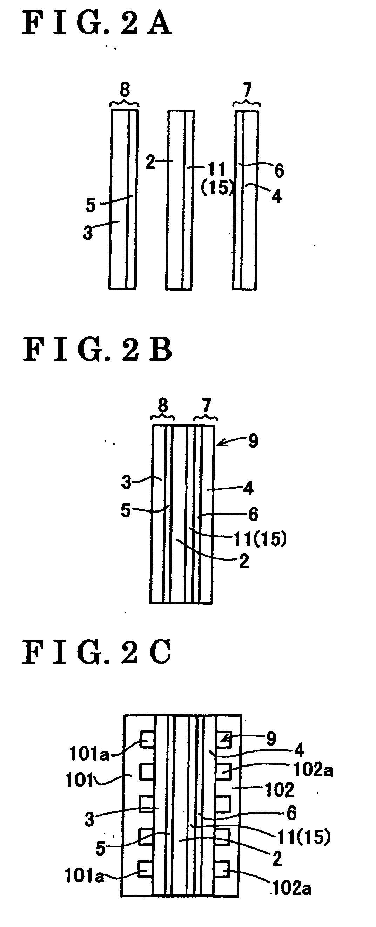

A first example will be explained with reference to Fig. 1A to 1C and Fig. 2A to 2C. In the first example, silica microparticles of ceramics (manufactured by Admatechs Co., Ltd., S0-E2) having a particle size of from 0.4 µm to 0.6 µm, 5 g, a solution of 5 wt % of ion-exchange resin (manufactured by Asahi Kasei Corporation, SS-910), 100 g, water, 20 g, and as a forming helper agent, isopropyl alcohol, 20g, were sufficiently mixed for making a silica paste. The silica paste was applied onto a tetrafluoroethylene sheet 10 by use of a doctor blade method for forming a reinforcement layer 11. The reinforcement layer 11 is formed from a mixture containing microbodies of silica as ceramics having resistance to sticking of carbon fibers and resistance to gas permeability and an electrolyte component containing an ion-exchange resin having proton conductivity. The silica microparticles (microbodies) described above have substantially spherical shape. In this case, the silica microparticle was mixed and applied so as to make the amount of silica particles supported in the reinforcement layer 11 per unit area to be 0.2 mg/cm². Further, the reinforcement layer 11 was dried and becomes a silica sheet 12. In addition, an average thickness of the reinforcement layer 11 can be from 5 µm to10 µm.

As illustrated in Fig. 1B, an electrolyte membrane 2, having a thickness of 50 µm, similar to that of the electrolyte membrane in the comparative example described above, was prepared. Next, the silica sheet 12 described above was arranged onto the electrolyte membrane 2 so as to make contact of the reinforcement layer 11 with the electrolyte membrane 2. In this condition, the silica sheet 12 and the electrolyte membrane 2 was hot-pressed in a condition of 150 °C in a temperature and 10 MPa in a pressure for 1 minute so as to print the reinforcement layer 11 onto the electrolyte membrane 2. After that, as illustrated in Fig. 1C, a tetrafluoroethylene sheet 10 of the silica sheet 12 was detached from the silica sheet 12.

Next, a gas diffusion electrode 7 for oxidizing agent (electrode for oxidizing agent) and a gas diffusion electrode 8 for fuel (electrode for fuel), both as same electrodes as in the comparative examples, were prepared. In other words, as described in the comparative example, a mixture containing water, 1000 g, and carbon black (manufactured by Cabot, VULCAN XC72R), 300 g, was homogenized by means of a homogenizer for 10 minutes. Next, a dispersion (manufactured by Daikin Industries, POLYFLON, Grade D1), containing 60 wt % of tetrafluoroethylene (referred to as PTFE later) as fluorocarbon polymers, 250 g, was added to the mixture described above. The mixture was further homogenized for 10 minutes. Thus, a carbon ink was made. A carbon paper (manufactured by Toray, TORAYCA TGP-060, thickness: 180 µm) was thrown into the carbon ink for letting the carbon black and the PTFE, contained in the carbon ink, infiltrate into the carbon paper.

Next, the carbon paper was put into a drying furnace maintained in a temperature condition of 80 °C for letting excess moisture included in the carbon paper evaporate. After that, the carbon paper was maintained in a condition of sintering temperature of 390 °C for 60 minutes for sintering the PTFE. Thus, a water-repellent carbon paper was made. Carbon papers made as described above were utilized for the gas diffusion layer 3 for fuel and the gas diffusion layer 4 for oxidizing agent. The gas diffusion layer 3 for fuel and the gas diffusion layer 4 for oxidizing agent are formed from aggregation of carbon fibers as electrically conductive fibers. Carbon fibers are utilized, considering easiness of forming an electrically conductive path, corrosion resistance, and cost.

Next, a carbon-supported platinum catalyst (manufactured by Tanaka Kikinzoku Kogyo KK, TEC10E60E), containing 55 wt % of platinum, 12 g, a solution of 5 wt % of ion-exchange resin (manufactured by Asahi Kasei Corporation, SS-1080), 106g, water, 23g, and as a forming helper agent, isopropyl alcohol, 23g, were sufficiently mixed for making a catalyst paste. This catalyst paste was, for forming the catalyst layer 6 for oxidizing agent, applied onto the surface of the gas diffusion layer 4 for oxidizing agent by use of a doctor blade method. The catalyst paste was thus made and applied onto the surface of the gas diffusion layer 4 for oxidizing agent so as to make the amount of platinum supported in the catalyst layer for oxidizing agent 0.8 mg/cm². After that, the catalyst paste was dried. Thus, a gas diffusion electrode 7 for oxidizing agent (electrode for oxidizing agent) was formed. Accordingly, the gas diffusion electrode 7 for oxidizing agent includes the gas diffusion layer 4 for oxidizing agent and the catalyst layer 6 for oxidizing agent.

In addition, the catalyst paste described above was, for forming the catalyst layer 5 for fuel, applied onto the surface of the gas diffusion layer 3 for fuel by use of a doctor blade method. In this case, the catalyst paste was thus made and applied so as to making the amount of platinum supported in the catalyst layer 5 for fuel 0.2 mg/cm². After that, the catalyst paste was dried. Thus, a gas diffusion electrode 8 for fuel was formed. Accordingly, the gas diffusion electrode 8 for fuel includes the gas diffusion layer 3 for fuel and the catalyst layer 5 for fuel.

According to the example, as illustrated in Fig. 2A and 2B, the electrolyte membrane 2 was sandwiched by the gas diffusion electrode 7 for oxidizing agent (electrode for oxidizing agent) and the gas diffusion electrode 8 for fuel (electrode for fuel) so as to make contact of the catalyst layer 6 for oxidizing agent having been applied onto the gas diffusion electrode 7 for oxidizing agent with the reinforcement layer 11 of the electrolyte membrane 2 described above, and as to make contact of the catalyst layer 5 for fuel having been applied onto the gas diffusion electrode 8 for fuel with the opposite surface of the electrolyte membrane 2. After that, the electrolyte membrane 2 and the gas diffusion electrodes 7, 8 sandwiching the electrolyte membrane 2 were hot-pressed in a condition of 140 °C in a temperature, 8 MPa in a pressure, for 3 minutes. Thus, a membrane electrode assembly (MEA) 9 was made.

As illustrated in Fig. 2B, the MEA 9, in other words, the membrane electrode assembly, includes the gas diffusion layer 3 for fuel, the catalyst layer 5 for fuel, the electrolyte membrane 2, the reinforcement layer 11, the catalyst layer 6 for oxidizing agent, and the gas diffusion layer 4 for oxidizing agent, arranged in an order described above in a thickness direction.

Furthermore, as illustrated in Fig. 2C, as same as in the comparative example, an electric cell was made by a process of assembling a gas distribution plate 101 for fuel having a gas channel 101 a for fuel and a gas distribution plate 102 for oxidizing agent having a gas channel 102a for oxidizing agent with the MEA 9.

According to the example, as illustrated in Fig. 2A and 2B, because the reinforcement layer 11 is provided on the surface of the electrolyte membrane 2, during a process of pressing, such as hot-press in a process of manufacturing, the carbon fibers (electrically conductive fibers) forming a base of the gas diffusion layer 3, 4 can be restrained from sticking into the electrolyte membrane 2. Accordingly, the technique described above according to the first example of the present invention is advantageous for increasing a level of durability of the electrolyte membrane 2, and furthermore, for extending a period of serving time of the electrolyte membrane 2.

Because the reinforcement layer 11 contains the microparticles having resistance to gas permeability, the microparticles can have a function as a barrier for permeation of gases. Accordingly, reactive gases can be restrained from permeating through the electrolyte membrane 2 to the opposite electrode. Accordingly, the technique above described is advantageous for increasing a level of durability of the electrolyte membrane 2, and furthermore, for extending a period of serving time of the electrolyte membrane 2.

Further, because the reinforcement layer 11 described above is made on the basis of silica, a level of thermal conductivity of the reinforcement layer 11 can be lower in comparison with that of the reinforcement layer 11 not containing silica. In addition, reaction of generating electricity occurred at the gas diffusion electrode 7 for oxidizing agent is accompanied by generation of heat. For restraining the electrolyte membrane 2 from being thermally deteriorated, during the operation of generating electricity, it is preferable that the generated heat not be transmitted to the electrolyte membrane 2 that much. In terms of this point, according to the example of the present invention, as described above, because the reinforcement layer 11 is provided on the surface of the electrolyte membrane 2 so as to face the gas diffusion electrode 7 for oxidizing agent, it can be expected that the reinforcement layer 11 made on the basis of silica be effective for restraining the heat generated in a reaction of generating electricity from being transmitted to the electrolyte membrane 2. In this respect, increase in a level of durability of the electrolyte membrane 2 can be expected.

For the electric cell described above, an initial cell voltage, a cell voltage output after 200 hours-intermittent operations, an initial amount of cross leak of the cell, and the amount of cross leak of the cell after 200 hours-intermittent operations were measured. Table 1 represents results of them.

### (Second example)

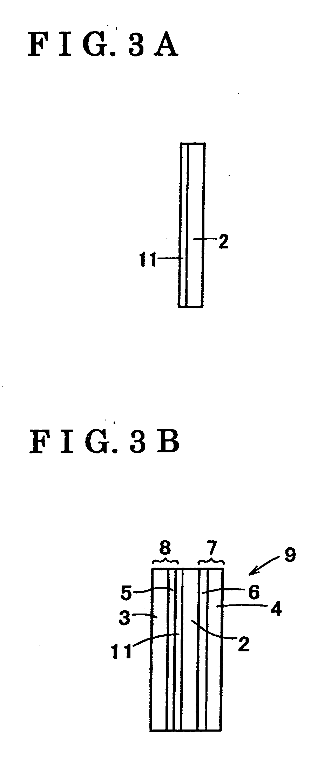

A second example basically has a similar configuration to that of the first example. Differences from the first example will be mainly explained. In the second example, the reinforcement layer 11 is provided so as to face the diffusion electrode 7 for fuel, which is substantially different from the first example. Then, the gas diffusion electrode 7 for oxidizing agent and the gas diffusion electrode 8 for fuel, as same as in the first example, were utilized. Further, as illustrated in Fig. 3A, the electrolyte membrane 2, having the reinforcement layer 11 having been applied onto one surface of the electrolyte membrane 2, was prepared. Then, as illustrated in Fig. 3B, the electrolyte membrane 2 was sandwiched by the gas diffusion electrode 7 for oxidizing agent and the gas diffusion electrode 8 for fuel so as to make contact of the catalyst layer 5 for fuel of the gas diffusion electrode 8 for fuel with the reinforcement layer 11 of the electrolyte membrane 2, and as to make contact of the catalyst layer 6 for oxidizing agent of the gas diffusion electrode 7 for oxidizing agent with the opposite surface of the electrolyte membrane 2. In this condition, the electrolyte membrane 2 and the gas diffusion electrodes 7, 8 sandwiching the electrolyte membrane 2 were pressed in a condition of 140 °C in a temperature, 8 MPa in a pressure, for 3 minutes. Thus, a membrane electrode assembly (MEA) 9 was made. An electric cell was made by a process of assembling a gas distribution plate 101 for fuel and a gas distribution plate 102 for oxidizing agent with the MEA 9 in the same way as in the comparative example. The electric cell was evaluated in the same way as in the comparative example. Table 1 represents the results of the evaluation.

### (Third example)

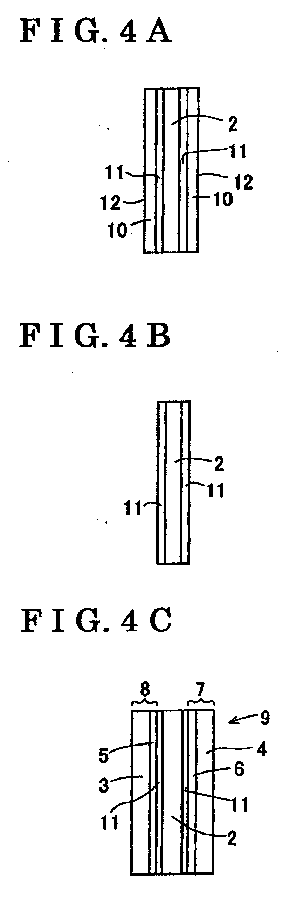

A third example basically has a similar configuration to that of the first example. Differences from the first example will be mainly explained. In the third example, as illustrated in Fig. 4A, the silica sheets 12 and the electrolyte membrane 2 were arranged so as to make contact of the reinforcement layers 11 with the both surfaces of the electrolyte membrane 2. In this condition, the silica sheets 12 and the electrolyte membrane 2 were hot-pressed in a condition of 150 °C in a temperature, 10 MPa in a pressure, for 1 minute. Thus, the reinforcement layers 11 were printed onto both surfaces of the electrolyte membrane 2. After that, sheets 10 of the silica sheets 12 were detached. Accordingly, as illustrated in Fig. 4B, the reinforcement layers 11 are arranged onto the both surfaces of the electrolyte membrane 2. Then, in the same way as in the first example, an MEA 9 was made (Please refer to Fig. 4C). The MEA9 was evaluated in the same way as in the comparative example. Table 1 represents the results of the evaluation.

### (Fourth example)

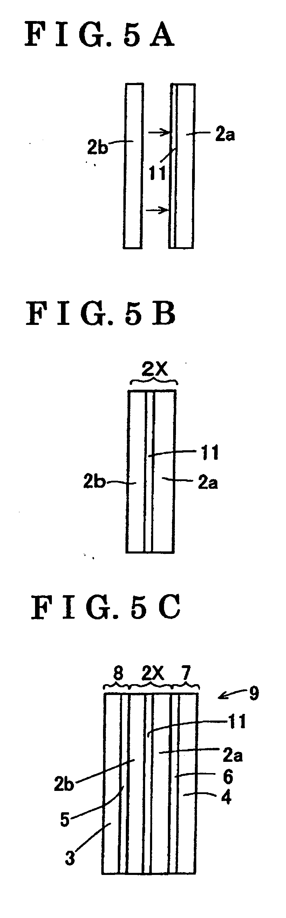

A fourth example basically has a similar configuration to that of the first example. Differences from the first example will be mainly explained. In the fourth example, as represented in Fig. 5A, two electrolyte membranes 2a, 2b (manufactured by DuPont, Nafion 111) of 25 µm of thickness were prepared. Then, in the same way as in the first example, a reinforcement layer 11 was printed onto one surface of an electrolyte membrane 2a. After that, an electrolyte membrane 2b was arranged onto the reinforcement layer 11. In this condition, the electrolyte membranes 2a, 2b and the reinforcement layer 11 were hot-pressed in a condition of 150 °C in a temperature, 10 MPa in a pressure, for 1 minute. Thus, the two electrolyte membranes were bonded each other across the reinforcement layer 11, and thus an electrolyte membrane 2X was made (Please refer to Fig. 5B).

Further, a gas diffusion electrode 7 for oxidizing agent and a gas diffusion electrode 8 for fuel, similar electrodes as in the comparative example, were prepared. Next, as illustrated in Fig. 5C, the electrolyte membrane 2X was sandwiched in thickness direction by the gas diffusion electrode 7 for oxidizing agent and the gas diffusion electrode 8 for fuel so as to make contact of the electrolyte membrane 2b of the electrolyte membrane 2X with the catalyst layer 5 for fuel, and as to make contact of the electrolyte membrane 2a of the electrolyte membrane 2X with the catalyst layer 6 for oxidizing agent. In this condition, the electrolyte membrane 2X, the gas diffusion electrode 7 for oxidizing agent, and the gas diffusion electrode 8 for fuel were hot-pressed in a condition of 140 °C in a temperature, 8 MPa in a pressure, for 3 minute. Thus, a MEA 9 was made.

According to the fourth example, because the reinforcement layer 11 is provided inside the electrolyte membrane 2X, during a process of pressing such as a hot-press in the manufacturing process, the carbon fibers (electrically conductive fibers) can be restrained from sticking through the electrolyte membrane 2, and the reaction gases can be restrained from permeating through the electrolyte membrane 2X. The MEA 9 was evaluated in the same way as in the comparative example. Table 1 represents the results of the evaluation.

### (Fifth example)

A fifth example basically has a similar configuration to that of the first example. Fig. 1A to 1C and Fig. 2A to 2C will be applied correspondingly. Differences from the first example will be mainly explained. In the fifth example, carbon black was utilized instead of silica. In other words, in the fifth example, as an alternative of silica, carbon black (Ketjenblack), 5 g, a solution of 5 wt % of ion-exchange resin (manufactured by Asahi Kasei Corporation, SS-910), 100g, water, 20g, and as a forming helper agent, isopropyl alcohol, 20g, were sufficiently mixed. Thus, a carbon black paste was made. This carbon black paste was applied onto a sheet 10 by use of a doctor blade method for forming a reinforcement layer 15 formed from the carbon black so as to make the amount of the supported carbon black in the reinforcement layer 15 to be 0.2 mg/cm². After that, the reinforcement layer 15 was dried and becomes a carbon black sheet 16. The reinforcement layer 15 contains the carbon black serving as the microbodies having resistance to sticking by carbon fibers, and the electrolyte component containing the ion-exchange resin having proton-conductivity. In addition, an average thickness of the reinforcement layer 15 can be within a range of from 5 µm to 10 µm.

Next, an electrolyte membrane 2 of 50 µm in thickness, similar to that utilized in the comparative example, and the reinforcement layer 15 were arranged so as to make contact of the reinforcement layer 15 with one surface of the electrolyte membrane 2. In this condition, the carbon black sheet 16 and the electrolyte membrane 2 was hot-pressed in a condition of 150 °C in a temperature, 10 MPa in a pressure, for 1 minute. Thus, the reinforcement layer 15 was printed onto the electrolyte membrane 2. After that, the sheet 10 was detached.

Next, a gas diffusion electrode 7 for oxidizing agent and a gas diffusion electrode 8 for fuel, both as same electrodes as in the comparative examples, were prepared. The electrolyte membrane 2 was sandwiched in a thickness direction by the gas diffusion electrode 7 for oxidizing agent (electrode for oxidizing agent) and the gas diffusion electrode 8 for fuel (electrode for fuel) so as to make contact of the catalyst layer 6 for oxidizing agent of the gas diffusion electrode 7 for oxidizing agent with the reinforcement layer 15 of the electrolyte membrane 2 described above, and as to make contact of the catalyst layer 5 for fuel of the gas diffusion electrode 8 for fuel with the opposite surface of the electrolyte membrane 2. In this condition, the electrolyte membrane 2 and the gas diffusion electrodes 7, 8 were hot-pressed in a condition of 140 °C in a temperature, 8 MPa in a pressure, for 3 minutes. Thus, a membrane electrode assembly (MEA) 9 was made. The MEA was evaluated in the similar way as in the comparative example. Table 1 represents the results of the evaluation.

**(Table 1)**

| | Comparative example | First example | Second example | Third example | Fourth example | Fifth example |
|---|---|---|---|---|---|---|
| Initial cell voltage V, 0.2 A/cm² | 0.769 | 0.766 | 0.767 | 0.768 | 0.765 | 0.767 |
| Cell voltage after test V, 0.2 A/cm² | 0.721 | 0.746 | 0.743 | 0.740 | 0.750 | 0.741 |
| Initial cross leak of cell Kpa, 5min × 20 KPa | 0 | 0 | 0 | 0 | 0 | 0 |
| Cell cross leak after test Kpa, 5min × 20 KPa | 1.34 | 0.11 | 0.14 | 0.18 | 0.06 | 0.13 |

### (Evaluation)

As found in the results represented in Table 1, in comparison with a polymer electrolyte fuel cell according to the comparative example, polymer electrolyte fuel cells according to from the first to fifth examples exhibited high cell voltage after the test, and substantially small amount of leak of gas after the test. In particular, in the fourth example, the amount of leak of gas was smallest. As described above, the polymer electrolyte fuel cells according to from the first to fifth examples were found to be superior in output of cell voltage and resistance to leak of gas.

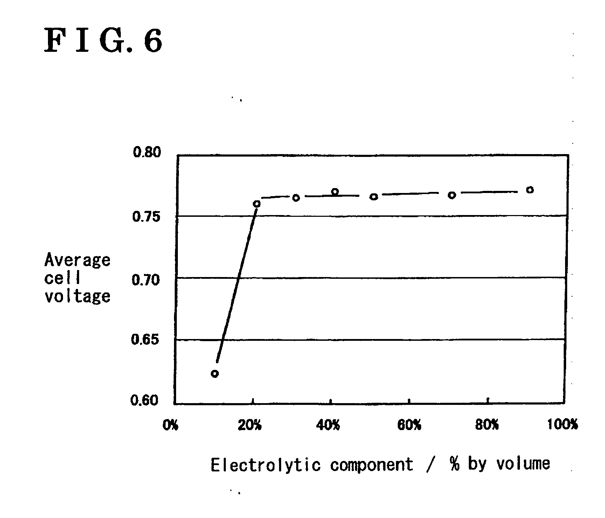

For further investigation of the fuel cell according to the first example, cell voltages of the fuel cells were measured with varied composition ratios of the electrolyte component to the microbodies, both contained in the reinforcement layer 11. Conditions of generating electricity were the same as in the examples described above. Fig. 6 represents the results of the investigation. As illustrated in Fig. 6, when a ratio of the electrolyte component is from 20 % to 100 % by volume relative to the reinforcement layer 11 of 100 % by volume, average cell voltages were high. However, when the ratio of the electrolyte component is equal to 10 % by volume relative to the reinforcement layer 11 of 100 % by volume, an average cell voltage tended to be sharply lowered. Accordingly, for ensuring resistance to sticking by carbon fibers as well as obtaining a high cell voltage, it is preferable that the ratio of the electrolyte component be 15 % by volume or higher, be 20 % by volume or higher, relative to the reinforcement layer of 100 %. As the ratio of the contained microbodies becomes excessively high, because the ratio of the contained electrolyte component becomes low, there is a danger that a level of proton conductivity becomes low. With consideration intending to ensure a preferable level of proton conductivity, it is preferable that the ratio of the contained microbodies be 85 % by volume or lower, be 80 % by volume or lower.

On the other hand, in order for effectively restraining the electrically conductive fibers from sticking into the electrolyte membrane it is preferable that a ratio of the microbodies be 15 % by volume or higher, 20 % by volume or higher relative to the 100 % by volume of the reinforcement layer. Accordingly, it is preferable that the ratio of the electrolyte component be from 15 % to 85 % by volume, be from 20 % to 80 % by volume relative to the reinforcement layer of 100 % by volume, and it is preferable that the ratio of the contained microbodies such as silica be from 85 % to 15 % by volume, be from 80 % to 20 % by volume to the reinforcement layer of 100 % by volume.

In addition, the present invention is not limited to the embodiment described above, and illustrated in drawing figures. For example, a shape of silica microparticles is substantially spherical. However, a shape of silica microparticles is not limited. A shape of the silica microparticles can also be non-spherical shape, such as elliptical shape, polyhedral shape, or some other shapes. As described above, variations can be implemented without deviating from the content of the present invention. Following technical concepts can be construed from the above.

### (Appendix 1)

A membrane electrode assembly formed by arranging an electrode for fuel, an electrolyte membrane, an electrode for oxidizing agent in an order described above is characterized in that a reinforcement layer, containing a plurality of microbodies having at least either one of resistance to gas permeability and resistance to sticking and an electrolyte component having ionic conductivity, is provided between at least either one of the electrode for fuel and the electrode for oxidizing agent and the electrolyte membrane, or is provided inside the electrolyte membrane.

### (Appendix 2)

A polymer electrolyte fuel cell including a membrane electrode assembly formed by arranging an electrode for fuel, an electrolyte membrane, an electrode for oxidizing agent in an order described above is characterized in that a reinforcement layer, containing a plurality of microbodies having at least either one of resistance to gas permeability and resistance to sticking and an electrolyte component having ionic conductivity, is provided between at least either one of the electrode for fuel and the electrode for oxidizing agent and the electrolyte membrane, or is provided inside the electrolyte membrane.

In summary, an inventor of the present invention has been engaged in development of a membrane electrode assembly for long years. The inventor found and confirmed advantages of providing a reinforcement layer between at least either one of a diffusion layer for fuel and a diffusion layer for oxidizing agent and an electrolyte membrane, or inside the electrolyte membrane in terms of restraining electrically conductive fibers from sticking into the electrolyte membrane, which therefore leads to further advantages for restraining reactive gases from permeating through the electrolyte membrane. The reason why effects described above are obtained is assumed that, during a process of pressing such as a heat-press in a process of manufacture, the effects described above can restrain the electrically conductive fibers such as carbon fibers which is a base of the gas diffusion layer from sticking into the electrolyte membrane, thus restraining gases from permeating through the traces of sticking, thereby restraining reactive gases from permeating to the opposite side electrode.

In addition, the inventor of the present invention found and confirms advantages of providing a reinforcement layer containing a plurality of microbodies having resistance to gas permeability and an electrolyte component having ionic conductivity between at least either one of a gas diffusion layer for fuel and a gas diffusion layer for oxidizing agent and an electrolyte membrane, or inside the electrolyte membrane in terms of restraining reaction gases from permeating through the electrolyte membrane. The reason why effects described above are obtained can be assumed that the reinforcement layer containing a plurality of microbodies which restrains reactive gases from permeating is present, thus permeation of reactive gases through the electrolyte membrane is restrained, and the permeation of reaction gases to the opposite side of the electrode can therefore be restrained.

According to an aspect of the present invention, a membrane electrode assembly is formed by arranging a gas diffusion layer for fuel on the basis of electrically conductive fibers, a catalyst layer for fuel, an electrolyte membrane, a catalyst layer for oxidizing agent, and a gas diffusion layer for oxidizing agent on the basis of electrically conductive fibers in an order described above. A reinforcement layer for restraining the electrically conductive fibers from sticking into the electrolyte membrane is provided between at least either one of the gas diffusion layer for fuel and the gas diffusion layer for oxidizing agent and the electrolyte membrane, or is provided inside the electrolyte membrane.

According to a further aspect of the present invention, a polymer electrolyte fuel cell includes a membrane electrode assembly formed by arranging a gas diffusion layer for fuel made on the basis of electrically conductive fibers, a catalyst layer for fuel, an electrolyte membrane, a catalyst layer for oxidizing agent, and a gas diffusion layer for oxidizing agent made on the basis of electrically conductive fibers in an order described above. A reinforcement layer for restraining the electrically conductive fibers from sticking into the electrolyte membrane is provided between at least either one of the gas diffusion layer for fuel and the gas diffusion layer for oxidizing agent and the electrolyte membrane, or is provided inside the electrolyte membrane.

According to the aspect of the present invention, sticking by the electrically conductive fibers such as carbon fibers which are a base of the gas diffusion layer into the electrolyte membrane can be restrained, and permeation of gases through the traces of sticking can be restrained.

According to a further aspect of the present invention, a membrane electrode assembly is formed by arranging an electrode for fuel, an electrolyte membrane, an electrode for oxidizing agent in an order described above. A reinforcement layer containing a plurality of microbodies having resistance to gas permeability and an electrolyte component having ionic conductivity is provided between, on the one hand, at least either one of the electrode for fuel and the electrode for oxidizing agent, on the other hand, the electrolyte membrane, or is provided inside the electrolyte membrane.

According to a further aspect of the present invention, a polymer electrolyte fuel cell includes a membrane electrode assembly formed by arranging an electrode for fuel, an electrolyte membrane, and an electrode for oxidizing agent in an order described above. A reinforcement layer containing a plurality of microbodies having resistance to gas permeability and an electrolyte component having ionic conductivity is provided between at least either one of the electrode for fuel and the electrode for oxidizing agent and the electrolyte membrane, or is provided inside the electrolyte membrane.

According to the aspect of the present invention, because of presence of the plurality of microbodiess having resistance to gas permeability, permeation of reaction gases through the electrolyte membrane can be restrained. Ionic conductivity can be ensured by an electrolyte component of the reinforcement layer.

According to a further aspect of the present invention, because sticking into the electrolyte membrane can be restrained, further improvement in durability of the electrolyte membrane can be expected. Furthermore, because sticking into the electrolyte membrane can be restrained, permeation of reactive gases through the electrolyte membrane can be restrained, which is thus advantageous for further improvement of utilization of reactive gases.

The present invention can be utilized for a polymer electrolyte fuel cell employed in equipment for generating electricity for a vehicle. The present invention can also be utilized for stationary or mobile polymer electrolyte fuel cell.

A membrane electrode assembly (9) is formed by arranging a gas diffusion layer (3) for fuel made on the basis of electrically conductive fibers, a catalyst layer (5) for fuel, an electrolyte membrane (2), a catalyst layer (6) for oxidizing agent, and a gas diffusion layer (4) for oxidizing agent made on the basis of electrically conductive fibers in an order described above. The membrane electrode assembly is characterized in that a reinforcement layer (11) for restraining the electrically conductive fibers from sticking into the electrolyte membrane is provided between at least either one of the gas diffusion layer for fuel and the gas diffusion layer for oxidizing agent and the electrolyte membrane, or is provided inside the electrolyte membrane.

## Claims

1. A membrane electrode assembly (9) formed by arranging a gas diffusion layer (3) for fuel made on the basis of electrically conductive fibers, a catalyst layer (5) for fuel, an electrolyte membrane (2), a catalyst layer (6) for oxidizing agent, and a gas diffusion layer (4) for oxidizing agent made on the basis of electrically conductive fibers in an order described above **characterized in that**
a reinforcement layer (11) for restraining the electrically conductive fibers from sticking into the electrolyte membrane is provided between at least either one of the gas diffusion layer for fuel and the gas diffusion layer for oxidizing agent and the electrolyte membrane, or is provided inside the electrolyte membrane.

2. The membrane electrode assembly according to claim 1, wherein
the reinforcement layer contains a plurality of microbodies having resistance to sticking and an electrolyte component having ionic conductivity.

3. A membrane electrode assembly (9) formed by arranging an electrode (8) for fuel, an electrolyte membrane (2), and an electrode (7) for oxidizing agent in an order described above **characterized in that**
a reinforcement layer (11) containing a plurality of microbodies having resistance to gas permeability and an electrolyte component having ionic conductivity is provided between at least either one of the electrode for fuel and the electrode for oxidizing agent and the electrolyte membrane, or is provided inside the electrolyte membrane.

4. The membrane electrode assembly according to either one of claims 2 and 3, wherein the plurality of microbodies are made of inorganic substance.

5. The membrane electrode assembly according to claim 4, wherein
the plurality of microbodies include at least one of ceramics, carbon microparticles, and metal.

6. The membrane electrode assembly according to any one of claims 2 to 5, wherein an average particle size of the plurality of microbodies is from 0.05 µm to 20 µm.

7. A polymer electrolyte fuel cell, comprising:
a membrane electrode assembly (9) formed by arranging a gas diffusion layer (3) for fuel made on the basis of electrically conductive fibers, a catalyst layer (5) for fuel, an electrolyte membrane (2), a catalyst layer (6) for oxidizing agent, and a gas diffusion layer (4) for oxidizing agent made on the basis of electrically conductive fibers in an order described above **characterized in that**
a reinforcement layer (11) for restraining the electrically conductive fibers from
sticking into the electrolyte membrane is provided between at least either one of the gas diffusion layer for fuel and the gas diffusion layer for oxidizing agent and the
electrolyte membrane, or is provided inside the electrolyte membrane.

8. A polymer electrolyte fuel cell, comprising:
a membrane electrode assembly (9) formed by arranging an electrode (8) for fuel, an electrolyte membrane (2), and an electrode (7) for oxidizing agent in an order described above **characterized in that**
a reinforcement layer (11) containing a plurality of microbodies having resistance to
gas permeability and an electrolyte component having ionic conductivity is provided between at least either one of the electrode for fuel and the electrode for oxidizing agent and the electrolyte membrane, or is provided inside the electrolyte membrane.
